# DEMANDE DE BREVET EUROPEEN

(11) **EP 1 112 975 A1**
(43) Date de publication de la demande: **04.07.2001**
(21) Numéro de dépôt: 00403229.8
(22) Date de dépôt: 20.11.2000
(51) Int. Cl.: C03B 37/018, C03B 37/012, H05H 1/30

(54) **Procédé et dispositif de fabrication de préformes destinées à la réalisation de fibres optiques**

(30) Priorité: 30.12.1999 FR 9916718
(71) Demandeur: ALCATEL, 75008 Paris (FR)
(72) Inventeur: Ripoche, Pierre, 45300 Pithiviers (FR); Drouart, Alain, 92000 Nanterre (FR); Humbert, Patrick, 75011 Paris (FR)
(74) Mandataire: Laroche, Danièle

(57) **Abrégé**

L'invention concerne un procédé de fabrication d'une préforme cylindrique destinée à la réalisation d'une fibre optique de diamètre sensiblement plus faible. Ce procédé consiste à augmenter le diamètre d'une préforme primaire (10) par injection (24) de grains sur la surface de cette préforme primaire et à fixer ces grains sur la surface par un flux thermique obtenu par une torche à plasma comprenant un tube (16) en matériau réfractaire et un inducteur (22) entourant le tube.

On diminue la distance entre, d'une part, l'extrémité (14) du tube (16) et, d'autre part, l'inducteur lorsque le diamètre de la préforme augmente. On augmente ainsi la température de la surface extérieure, ce qui permet d'obtenir des préformes de plus grand diamètre ou un meilleur rendement.

## Description

L'invention est relative à un procédé et à un dispositif de fabrication d'une préforme cylindrique de verre à l'aide d'une torche à plasma, une telle préforme étant destinée à la réalisation de fibres optiques.

L'utilisation des fibres optiques se répand de plus en plus, notamment dans le domaine des télécommunications.

L'augmentation de cette utilisation entraîne un accroissement de leur production et donc la nécessité d'augmenter la productivité des installations de fabrication.

Ce problème se pose tant pour la fabrication des fibres proprement dites que pour les produits intermédiaires servant à leur fabrication. En effet pour fabriquer une fibre optique de diamètre 125 microns, on part d'une préforme de verre de diamètre de 40 à 80 mm environ et cette préforme est elle-même réalisée à partir d'une préforme primaire de diamètre 20 à 25 mm environ dont on augmente progressivement le diamètre par dépôt de silice.

L'invention concerne la fabrication d'une telle préforme à partir d'une préforme primaire. Elle concerne plus particulièrement la fabrication d'une préforme à l'aide d'une torche à plasma.

Une torche à plasma comprend un tube en matériau réfractaire, par exemple en silice, à l'intérieur duquel on injecte un gaz de chauffage, notamment de l'air qui est dirigé radialement vers la préforme primaire. L'air injecté est porté à très haute température, de l'ordre de 10 à 15000°C de façon à former un plasma, grâce à un inducteur constitué par une bobine de matériau conducteur entourant une partie de la surface extérieure du tube en matériau réfractaire ; cette bobine est alimentée en courant alternatif à haute fréquence, de l'ordre de plusieurs MHz, et de puissance élevée, de l'ordre de 50 à 150 KW. L'air ainsi chauffé sert à déposer progressivement de la silice sur la surface extérieure de la préforme primaire. A cet effet, des grains de silice sont injectés dans l'espace entre l'extrémité de sortie de la torche et la surface extérieure de la préforme en cours de fabrication.

Pour un dépôt uniforme de silice sur la surface extérieure de la préforme primaire, on fait tourner cette dernière autour de son axe longitudinal et on la déplace de façon alternée selon la direction de cet axe longitudinal devant la torche à plasma, à une distance constante de cette dernière. De cette manière on obtient une préforme de bonne qualité, c'est-à-dire homogène, transparente et sans bulle de gaz.

Afin d'obtenir une homogénéité satisfaisante de la préforme, il faut qu'au cours de sa fabrication, sa surface extérieure reste à une température élevée (supérieure à 2000 °C). Or, pour une puissance et un débit d'air plasma déterminés, la température de dépôt, qui est proportionnelle à la température du plasma entrant en contact avec la surface extérieure de la préforme, dépend de la distance de cette surface au centre de l'inducteur. Il est, de plus, préférable de maintenir constante la distance entre la sortie de torche et la surface extérieure de la préforme afin de conserver en sortie de torche un bon écoulement des gaz plasma et d'injection des grains. Pour atteindre cet objectif, l'axe de la préforme en cours de fabrication ne doit pas rester à une distance constante de l'inducteur, car, s'il en était ainsi, il en résulterait une diminution progressive de la distance entre la surface extérieure de la préforme et le bord de sortie de la torche, et donc une perturbation de l'écoulement des gaz plasma et de l'injection du grain. On maintient donc constante la distance entre la sortie de torche et la surface extérieure de la préforme en éloignant l'axe de la préforme de la torche à plasma, au fur et à mesure de l'augmentation du diamètre de la préforme primaire.

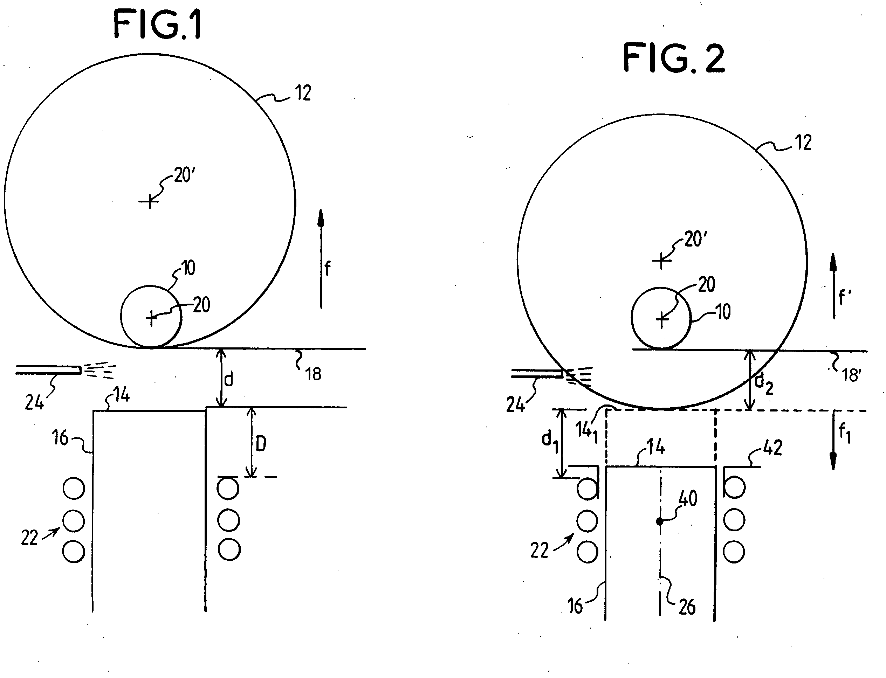

On a représenté sur la figure 1 un schéma illustrant ce procédé classique de fabrication de préforme à l'aide d'une torche à plasma. Sur ce schéma on a montré, d'une part, la préforme primaire 10 avant tout dépôt sur la surface extérieure et, d'autre part, la préforme 12 en fin de fabrication dont le périmètre est nettement plus élevé. La distance d entre l'extrémité 14 du tube réfractaire 16 et la génératrice 18 de la préforme qui est la plus proche de l'extrémité 14, reste constante.

La flèche f représente le déplacement de l'axe 20, 20' de la préforme au cours de la fabrication.

Il est à noter que l'extrémité 14 du tube 16 de torche est à une distance D de l'inducteur 22 qui est d'une valeur suffisante pour empêcher que des arcs électriques se produisent entre l'inducteur et le plasma sortant par l'extrémité 14.

Le tube 16 comporte une double paroi (non montrée en détail) dans laquelle circule de l'eau de refroidissement.

Si, avec le dispositif représenté sur la figure 1, qui est prévu pour réaliser des préformes d'un diamètre donné, on souhaite réaliser des préformes de diamètre plus important (100 à 150 mm par exemple) il faut augmenter la puissance fournie à l'inducteur de façon à augmenter la puissance, c'est à dire la température de la surface extérieure de la préforme pour les plus grands diamètres. De même, si on veut augmenter la capacité de production il faut augmenter le débit de grains de silice sortant d'un injecteur 24 entre l'extrémité 14 et la surface extérieure de la préforme. Cette augmentation de débit de grains entraîne aussi la nécessité d'augmenter la puissance.

Toutefois, la puissance appliquée à l'inducteur ne peut pas dépasser des limites déterminées par la résistance thermique du tube en matériau réfractaire 16.

L'invention permet d'augmenter la capacité de production de préformes d'une installation, sans qu'il soit indispensable d'augmenter la puissance fournie à l'inducteur.

Elle est caractérisée en ce que, pour augmenter la température de la surface extérieure pour les plus grands diamètres, on rapproche l'extrémité de la torche de l'inducteur, de façon à diminuer la distance entre l'inducteur et la surface extérieure de la préforme.

Dans le mode de réalisation préféré de l'invention, on maintient sensiblement constante la distance entre l'extrémité de la torche et la surface extérieure de la préforme en cours de fabrication, afin de maintenir un écoulement correct des gaz de plasma et une injection de grains satisfaisante. Autrement dit, si l'inducteur est immobile, la distance entre cet inducteur et la surface extérieure varie. Elle est plus grande pour les plus faibles diamètres que pour les plus grands diamètres de préforme. Cette condition est favorable à une bonne qualité de fabrication car la puissance apportée aùgmente avec le diamètre.

Pour empêcher la production d'arcs électriques qui pourraient résulter de la diminution de la distance entre l'inducteur et l'extrémité de la torche, on prévoit un écran isolant a l'extrémité de la torche, cet écran séparant l'inducteur du plasma sortant de la torche.

L'invention permet la fabrication de préformes de plus grand diamètre et/ou une productivité plus élevée et/ou une meilleure qualité de préforme. On a ainsi pu obtenir des gains de vitesse et de rendement de l'ordre de 25%.

La présente invention concerne un procédé de fabrication d'une préforme cylindrique destinée à la réalisation d'une fibre optique de diamètre sensiblement plus faible, ce procédé consistant à augmenter le diamètre d'une préforme primaire par injection de grains sur la surface de cette préforme primaire et à fixer ces grains sur la surface par un flux thermique obtenu par une torche à plasma comprenant un tube en matériau réfractaire et un inducteur entourant le tube. On diminue la distance entre, d'une part, l'extrémité du tube et, d'autre part, l'inducteur lorsque le diamètre de la préforme augmente.

Selon un mode de réalisation, on éloigne l'axe de la préforme de l'inducteur qui reste fixe quand le diamètre de cette préforme augmente.

Selon un mode de réalisation, on maintient sensiblement constante la distance entre l'extrémité du tube de la torche à plasma et la surface extérieure de la préforme quand le diamètre de cette dernière augmente.

La présente invention prévoit, en outre, un dispositif pour la mise en oeuvre du procédé, ce dispositif comportant des moyens pour déplacer selon son axe le tube de la torche par rapport à l'inducteur fixe.

Selon un mode de réalisation, le dispositif comporte un écran isolant séparant l'inducteur de l'espace dans lequel se forme le plasma.

Selon un mode de réalisation, le dispositif comporte un injecteur pour la projection de grains qui est mobile avec le tube de la torche à plasma.

D'autre caractéristiques et avantages de l'invention apparaîtront avec la description de certains de ses modes de réalisation, celle-ci étant effectuée en ce référant aux dessins ci annexés sur lesquels :
la figure 1, déjà décrite, est un schéma d'un dispositif connu, et
la figure 2 est un schéma analogue à celui de la figure 1, représentant un dispositif conforme à l'invention.

Sur la figure 2 les éléments analogues à ceux de la figure 1 comportent les mêmes chiffres de référence.

Dans la réalisation présentée sur la figure 2, l'inducteur 22 est immobile, c'est-à-dire non déplaçable. Par contre la torche 16 est déplaçable selon son axe 26. L'axe longitudinal 20, 20' de la préforme 10, 12 est déplaçable parallèlement à lui-même selon la direction de l'axe 26 au fur et à mesure que le diamètre de la préforme augmente.

Ainsi, au début de la fabrication, quand on installe la préforme primaire 10 l'extrémité 14₁, représentée en traits interrompus, de la torche est à une distancé d₁ de la partie de l'inducteur 22 qui est tournée vers cette extrémité, et cette extrémité 14₁ est à une distance d₂ de la génératrice 18' la plus proche de la préforme primaire 10. L'injecteur 24 projette les grains de silice dans l'intervalle entre l'extrémité 14₁ et la préforme primaire 10.

Quand le diamètre de la préforme 10 augmente, on maintient sensiblement constante la distance entre l'extrémité 14₁ de la torche 16 et la génératrice la plus proche de la préforme et on diminue la distance séparant cette extrémité de l'inducteur.

Autrement dit, contrairement à la torche représentée sur la figure 1 où l'on effectue un seul déplacement f de l'axe de la préforme, dans la réalisation représentée sur la figure 2, on déplace (flèche f') la préforme dans un sens et la torche 16 dans le sens contraire, selon la flèche f₁.

Le support de l'injecteur 24 est solidaire du support mobile de la torche, ce support d'injecteur étant ainsi mobile avec le tube 16, afin de maintenir une bonne injection des grains de silice lors du déplacement de la torche selon la flèche f₁.

On a représenté en trait plein la position de la torche lorsque la préforme 12 a atteint son plus grand diamètre. On voit que, dans ce cas, la distance entre l'inducteur 22 et la surface extérieure (qui, dans le cas particulier de la figure 2 est d₁) plus faible que la distance correspondante au début de la fabrication (qui, dans le cas particulier de la figure 2 est d₁ + d₂). Autrement dit pour les plus grands diamètres la température du panache du plasma au contact de la préforme et donc, la température de la surface extérieure de la préforme sont plus élevées, ce qui contribue à l'obtention d'une préforme de caractéristiques homogènes.

Par rapport à la réalisation représentée sur la figure 1, la distance entre le coeur 40 du plasma, au centre de l'inducteur, et la surface extérieure de la préforme est diminuée pour les plus grands diamètres, ce qui entraîne un gain de puissance utile et donc une possibilité d'augmentation de productivité et/ou d'augmentation de diamètre de préforme et/ou d'augmentation de qualité.

Pour empêcher la formation d'arcs électriques quand la torche a la position représentée en trait plein (extrémité proche de l'inducteur), on prévoit un écran 42 disposé à proximité de l'inducteur du côté tourné vers la sortie 14 de la torche 16.

Cet écran isolant 42 est, dans l'exemple, constitué par une couronne de quartz d'épaisseur de l'ordre de 2 mm.

L'invention permet notamment une augmentation de productivité d'installations existantes avec des modifications peu importantes de ces installations.

## Revendications

1. Procédé de fabrication d'une préforme cylindrique destinée à la réalisation d'une fibre optique de diamètre sensiblement plus faible, ce procédé consistant à augmenter le diamètre d'une préforme primaire par injection (24) de grains sur la surface de cette préforme primaire et à fixer ces grains sur la surface par un flux thermique obtenu par une torche à plasma comprenant un tube (16) en matériau réfractaire et un inducteur (22) entourant le tube, caractérisé en ce qu'on diminue la distance entre, d'une part, l'extrémité (14) du tube (16) et, d'autre part, l'inducteur lorsque le diamètre de la préforme augmente.

2. Procédé selon la revendication 1, caractérisé en ce qu'on éloigne l'axe de la préforme de l'inducteur qui reste fixe quand le diamètre de cette préforme augmente.

3. Procédé selon la revendication 1 ou 2, caractérisé en ce qu'on maintient sensiblement constante la distance entre l'extrémité du tube de la torche à plasma et la surface extérieure de la préforme quand le diamètre de cette dernière augmente.

4. Dispositif pour la mise en oeuvre du procédé selon l'une quelconque des revendications 1 à 3, caractérisé en ce qu'il comporte des moyens pour déplacer selon son axe (26) le tube de la torche (16) par rapport à l'inducteur (22) fixe.

5. Dispositif selon la revendication 4, caractérisé en ce qu'il comporte un écran isolant (42) séparant l'inducteur (22) de l'espace dans lequel se forme le plasma.

6. Dispositif selon la revendication 4 ou 5, caractérisé en ce qu'il comporte un injecteur (24) pour la projection de grains qui est mobile avec le tube (16) de la torche à plasma.
